# EUROPÄISCHE PATENTANMELDUNG

(11) **EP 4 517 588 A1**
(43) Veröffentlichungstag der Anmeldung: **05.03.2025**
(21) Anmeldenummer: 23193811.9
(22) Anmeldetag: 29.08.2023
(51) Int. Cl.: G06N 3/063, G06N 3/098

(54) **VERFAHREN ZUM ANPASSEN EINER RECHENLEISTUNG**

(71) Anmelder: Siemens Aktiengesellschaft, 80333 München (DE)
(72) Erfinder: Schall, Daniel, 2020 Hollabrunn (AT)
(74) Vertreter: Siemens Patent Attorneys

(57) **Zusammenfassung**

Die Erfindung betrifft ein Verfahren zum Anpassen einer Rechenleistung und/oder zur Anpassung einer Speicherkapazität eines industriellen Steuerungs- und/oder Überwachungssystems (1) bei der Durchführung eines Programmlaufes eines neuronalen Netzwerkes (2), wobei das Steuerungs- und/oder Überwachungssystem (1) mindestens einen neuromorphen Prozessor (NPU) (3) umfasst, wobei Live-Daten, insbesondere Kamerabilder, an den neuromorphen Prozessor (NPU) (3) weitergeleitet werden, wobei die Live-Daten ein neuronales Netzwerk (2) durchlaufen, das auf dem neuromporphen Prozessor (NPU) (3) eingesetzt wird, wobei das neuronale Netzwerk (2) mindestens eine Eingabeschicht (6), eine oder mehrere verborgene Schichten (7) und mindestens eine Ausgabeschicht (8) umfasst.

Bei einem Verfahren bei dem komplexere Programmläufe von neuronalen Netzwerken (2) ausgeführt werden können, ohne Einbußen bei der Modellgenauigkeit in Kauf zu nehmen, ist vorgesehen, dass das Steuerungs- und/oder Überwachungssystem (1) mit mindestens einem weiteren neuromorphen Prozessor (NPU) (9) verbunden ist, und wobei mindestens eine verborgene Schicht (7) durch den weiteren neuromorphen Prozessor (NPU) (9) bearbeitet wird.

## Beschreibung

Die vorliegende Erfindung betrifft ein Verfahren zum Anpassen einer Rechenleistung und/oder zur Anpassung einer Speicherkapazität eines industriellen Steuerungs- und/oder Überwachungssystems bei der Durchführung eines Programmlaufes eines neuronalen Netzwerkes, wobei das Steuerungs- und/oder Überwachungssystem mindestens einen neuromorphen Prozessor (NPU) umfasst.

Daneben betrifft die Erfindung eine Vorrichtung und ein System zum Anpassen einer Rechenleistung und/oder zur Anpassung einer Speicherkapazität eines industriellen Steuerungs- und/oder Überwachungssystems bei der Durchführung eines Programmlaufes eines neuronalen Netzwerkes, wobei das Steuerungs- und/oder Überwachungssystem mindestens einen neuromorphen Prozessor (NPU) umfasst.

Zur Beschleunigung von speziellen Berechnungen, wie zum Beispiel Deep Learning Inferenz mit künstlichen neuronalen Netzwerken, können spezialisierte System-on-a-Chip Lösungen genutzt werden, sogenannte KI-Beschleuniger, die auch als Recheneinheit für künstliche Intelligenz (KI) oder Neural Processor beziehungsweise Neural Processing Unit oder neuromorpher Prozessor, kurz NPU, bezeichnet werden können.

Da solche KI-basierten Algorithmen zunehmend auch in der industriellen Automatisierung eingesetzt werden, können solche speziellen Recheneinheiten für KI auch in Industriesteuerungen zur Steuerung von industriellen Anlagen oder Maschinen integriert werden.

Bei aus dem Stand der Technik bekannten industriellen Systemen zur Steuerung und/oder zur Überwachung können nur KI-Modelle ausgeführt werden, die auf eine einzelne NPU passen. Größere Deep-Learning-Modelle, zum Beispiel Transformatoren, können nicht ausgeführt werden, da sie die Speichergrenzen des NPU überschreiten würden. Dies führt zu einer starken Einschränkung, da die Modelle in Bezug auf Größe und Parameter sehr schnell wachsen. Daher wird es immer schwieriger, mit der schnellen Hardware-Innovation im OT-Bereich Schritt zu halten, um moderne Deep-Learning-Modelle unterzubringen.

Aus dem Stand der Technik ist dazu beispielsweise die Modellkomprimierung bekannt. Dabei werden Ansätzen wie Pruning, Quantisierung von Gewichten oder Gewichtungsclustertechniken verwendet, um aus größeren Modellen kompakte Modelle zu erzeugen. Dies hat immer den Nachteil, dass die Leistung gegen die Modellgenauigkeit gehandelt wird.

Ferner wird Edge-Computing verwendet, wobei ein Edge Computing-Gerät, das in verschiedenen Hardware-Konfigurationen erhältlich ist (kleinere Geräte und größere Geräte mit GPU-Unterstützung), genutzt werden können. Dies hat zur Folge, dass oft eine komplexere IT-Einrichtung erforderlich ist und mehr IT-Kenntnisse von einem Ingenieur verlangt werden.

Der vorliegenden Erfindung liegt daher die Aufgabe zugrunde, ein Verfahren sowie eine Vorrichtung zum Anpassen einer Rechenleistung und/oder zur Anpassung einer Speicherkapazität eines industriellen Steuerungs- und/oder Überwachungssystems bei der Durchführung eines Programmlaufes eines neuronalen Netzwerkes anzugeben, bei denen komplexere Programmläufe von neuronalen Netzwerken ausgeführt werden können, ohne Einbußen bei der Modellgenauigkeit in Kauf zu nehmen.

Diese Aufgabe ist zunächst durch die Merkmale des Patentanspruchs 1 dadurch gelöst, dass Live-Daten, insbesondere Kamerabilder, an den NPU weitergeleitet werden, wobei die Live-Daten ein neuronales Netzwerk durchlaufen, das auf dem NPU eingesetzt wird, wobei das neuronale Netzwerk mindestens eine Eingabeschicht, eine oder mehrere verborgene Schichten und mindestens eine Ausgabeschicht umfasst, wobei das Steuerungs- und/oder Überwachungssystem mit mindestens einem weiteren NPU verbunden ist, und dass mindestens eine verborgene Schicht durch den weiteren NPUs bearbeitet wird.

Bei einer ersten Ausgestaltung des erfindungsgemäßen Verfahrens ist vorgesehen, dass die Verbindung zwischen dem Steuerungs- und/oder Überwachungssystem mittels eines Backplane Communication Bus realisiert wird. Bei Backplane Communication Bus handelt es sich um einen Hochgeschwindigkeitsbus, der eine hohe Datenübertragungsrate besitzt. Auf diese Weise können Informationen ohne nennenswerte Latenz von dem NPU zum weiteren NPU übertragen werden.

Bei einer weiteren Ausgestaltung des erfindungsgemäßen Verfahrens ist vorgesehen, dass die Bearbeitung der verborgenen Schicht mittels Scale-Out an den mindestens einen weiteren NPU übermittelt wird. Die Bezeichnung Scale-Out wird in der Server- und der Speichertechnik für die Erweiterung von deren Architekturen benutzt. Es geht dabei um die Anpassung der Rechenleistung der Server oder um die Anpassung der Speicherkapazität an den steigenden Kundenbedarf.

Beim Scale-Out von Servern wird die Server- Infrastruktur um gleichartige Server erweitert. Dabei kann es sich um den Ausbau einer Serverfarm handeln, bei der jeder Server eine bestimmte Applikation unterstützt, es kann sich aber auch um die Errichtung einer Cluster-Infrastruktur handeln, bei der eine Anwendung die gesamte verfügbare Rechenkapazität etwa für technisch-wissenschaftliche Berechnungen beansprucht.

Beim Scale-Out von modularen Speicherarchitekturen geht es um die Anpassung der Speicherkapazität an das wachsende Datenvolumen. Bei dieser Technik wird der Speicherplatz Festplatten-übergreifend genutzt. Im Unterschied zum Scale-Out steht mit dem Scale-Up die Aufrüstung einzelner Server.

Ferner kann bei einer weiteren Ausgestaltung des erfindungsgemäßen Verfahrens vorgesehen sein, dass n weitere NPUs genutzt werden, wobei n einer natürlichen Zahl entspricht. Je mehr weitere NPUs genutzt werden können, desto komplexer beziehungsweise speicherintensiv kann das neuronale Netzwerk ausfallen. Größere Modelle können durch Hinzufügen einer zusätzlichen NPU ausgeführt werden (Inferenzaufgabe). Die Realisierbarkeit dieses Ansatzes wird jedoch durch die Anforderungen an die End-to-End-Leistung eingeschränkt. Die Kommunikation in einer verteilten Computerarchitektur führt zu zusätzlichen Latenzzeiten bei der End-to-End-Inferenzleistung.

Bei einer besonders vorteilhaften Ausgestaltung des erfindungsgemäßen Verfahrens ist vorgesehen, dass ein Vergleich zwischen der verfügbaren Speicherkapazität des Steuerungs- und/oder Überwachungssystems und dem von dem Programmlauf benötigte Speicher stattfindet und dass ein weiterer NPU genutzt wird, wenn die verfügbare Speicherkapazität eines NPUs für den Programmlauf nicht ausreicht. Auf diese Weise kann systematisch ein weiterer NPU genutzt werden, wenn Bedarf dazu besteht. Die Anzahl der weiteren NPUs kann dann entsprechend gering ausfallen.

Dabei kann bei einer weiteren Ausgestaltung des erfindungsgemäßen Verfahrens vorgesehen sein, dass durch einen Vergleich der verfügbaren Speicherkapazität des NPUs und der einzelnen weiteren NPUs und dem benötigten Speicher des Programmlaufs die Anzahl der benötigten NPUs minimiert wird. Ziel ist es folglich, die Anzahl der belegten NPUs und die Gesamtlatenzzeit zu reduzieren. Eine Variable, die durch den Optimierungsalgorithmus verändert werden soll, ist die NPU-ID, das heißt das mögliche Einsatzziel jeder Schicht des neuronalen Netzwerkes. Sobald eine nachfolgende Schicht (z. B. die nachfolgende Schicht von 1 ist 2, von 2 ist 3 und so weiter) nicht auf derselben NPU eingesetzt wird, ändert sich die Latenz von 0 auf 1, da ein Kommunikations-Overhead eingeführt wird. Eine Einschränkung besteht durch den verfügbaren Speicher und den zugewiesenen Speicher. Der zugewiesene Speicher muss kleiner oder gleich groß der verfügbare Speicher sein.

Zusätzlich kann bei einer weiteren Ausgestaltung der Erfindung vorgesehen sein, dass mittels eines vordefinierten Solvers das Minimum der benötigten NPUs ermittelt wird. Ebenso erfolgt eine NPU Zuweisung mit einem Solver.

Vorteilhafterweise ist bei einer weiteren Ausgestaltung des erfindungsgemäßen Verfahrens vorgesehen, dass der Solver mittels eines Generalized Reduced Gradients (GRG) arbeitet. Bei einer Lösungsmethode wie Generalized Reduced Gradient (GRG) handelt es sich um eine Erweiterung der reduzierten Gradientenmethode, um nichtlineare Ungleichheitsbedingungen zu berücksichtigen. Bei dieser Methode wird eine Suchrichtung gefunden, bei der für jede kleine Bewegung die aktuell aktiven Nebenbedingungen genau aktiv bleiben.

Die vorgenannte Aufgabe wird außerdem gelöst von einer Vorrichtung zum Anpassen einer Rechenleistung und/oder zur Anpassung einer Speicherkapazität eines industriellen Steuerungs- und/oder Überwachungssystems bei der Durchführung eines Programmlaufes eines neuronalen Netzwerkes, wobei das Steuerungs- und/oder Überwachungssystem mindestens einen neuromorphen Prozessor (NPU) umfasst, wobei eine Sensoreinrichtung derart eingerichtet ist, dass sie Live-Daten, insbesondere Kamerabilder, an den NPU weiterleitet, wobei die Live-Daten ein neuronales Netzwerk durchlaufen, das auf dem NPU eingesetzt wird, wobei das neuronale Netzwerk mindestens eine Eingabeschicht, eine oder mehrere verborgene Schichten und mindestens eine Ausgabeschicht umfasst, wobei das Steuerungs- und/oder Überwachungssystem mit mindestens einem weiteren NPU verbunden ist, und dass der weitere NPU derart eingerichtet ist, dass mindestens eine verborgene Schicht durch den weiteren bearbeitbar ist.

Elektronische oder elektrische Geräte im Rahmen der Vorrichtung und/oder andere relevante Geräte oder Komponenten gemäß den hier beschriebenen Ausführungsformen der vorliegenden Erfindung können unter Verwendung jeder geeigneten Hardware, Firmware (z. B. einer anwendungsspezifischen integrierten Schaltung), Software oder einer Kombination aus Software, Firmware und Hardware implementiert werden. Beispielsweise können die verschiedenen Komponenten dieser Geräte auf einem integrierten Schaltkreis (IC) oder auf separaten IC-Chips untergebracht sein. Darüber hinaus können die verschiedenen Komponenten dieser Geräte auf einer flexiblen gedruckten Schaltungsfolie, einem Tape-Carrier-Package (TCP), einer Leiterplatte (PCB) oder auf einem einzigen Substrat implementiert sein. Darüber hinaus können die verschiedenen Komponenten dieser Vorrichtungen ein Prozess oder Thread sein, der auf einem oder mehreren Prozessoren in einem oder mehreren Computergeräten läuft, Computerprogrammanweisungen ausführt und mit anderen Systemkomponenten interagiert, um die verschiedenen hier beschriebenen Funktionen auszuführen. Die Computerprogrammanweisungen sind in einem Speicher gespeichert, der in einem Computergerät unter Verwendung eines Standardspeichers, wie z. B. eines Arbeitsspeichers (RAM), implementiert werden kann. Die Computerprogrammanweisungen können auch in anderen nichtübertragbaren, computerlesbaren Medien gespeichert werden, wie z. B. auf einer CD-ROM, einem Flash-Laufwerk oder ähnlichem. Eine fachkundige Person sollte auch erkennen, dass die Funktionalität verschiedener Computergeräte kombiniert oder in ein einziges Computergerät integriert werden kann, oder dass die Funktionalität eines bestimmten Computergeräts auf ein oder mehrere andere Computergeräte verteilt werden kann, ohne vom Anwendungsbereich der beispielhaften Ausführungsformen der vorliegenden Erfindung abzuweichen.

Bei einer ersten Ausgestaltung der erfindungsgemäßen Vorrichtung ist vorgesehen, dass die Vorrichtung derart eingerichtet und ausgestaltet ist, ein erfindungsgemäßes Verfahren durchzuführen. Die obigen Ausführungen betreffend das erfindungsgemäße Verfahren gelten entsprechend auch für die erfindungsgemäße Vorrichtung.

Bevorzugt wird das erfindungsgemäße Verfahren bei Systemen mit verteilten Rechenvorrichtungen eingesetzt, also Klienten-Server-Systemen, welche eigene, jeweils lokale Modelle auf den Klienten und besonders bevorzugt zusätzlich ein zentrales, globales Modell auf dem Server einsetzen, wie beim föderierten Lernen von KI-Modellen. Dabei können Live-Daten, wie Kamera-Bilder, lokal verarbeitet werden, wie zuvor beschrieben und ein erneutes Training des globalen Modells am Server in der Cloud sehr effizient gestaltet werden. Dadurch wird erreicht, dass das globale Modell sehr zeitnah aktuell gehalten werden kann, da lokale Erkenntnisse zu Modelländerungen rasch an alle beteiligten Klienten des Klienten-Server-Systems verteilt werden können, was zu einem effizienten und genauen System führt.
Mit anderen Worten wird die erfindungsgemäße Aufgabe auch durch ein System zum Anpassen einer Rechenleistung und/oder zur Anpassung einer Speicherkapazität eines industriellen Steuerungs- und/oder Überwachungssystems bei der Durchführung eines Programmlaufes eines neuronalen Netzwerkes gelöst, wobei das System ein Klienten-Server-System ist, umfassend einen Server und zumindest zwei Klienten, und die zumindest zwei Klienten jeweils eine erfindungsgemäße Vorrichtung aufweisen, und das System dazu eingerichtet ist, das erfindungsgemäße Verfahren unter Anwendung des Prinzips föderierten Lernens auszuführen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Es zeigen:
- Figur 1: eine schematische Darstellung eines Steuerungs- und Überwachungssystems unter Verwendung eines NPUs und
- Figur 2: eine schematische Darstellung eines neuronalen Netzwerkes unter Verwendung eines Ausführungsbeispiels eines erfindungsgemäßen Verfahrens.

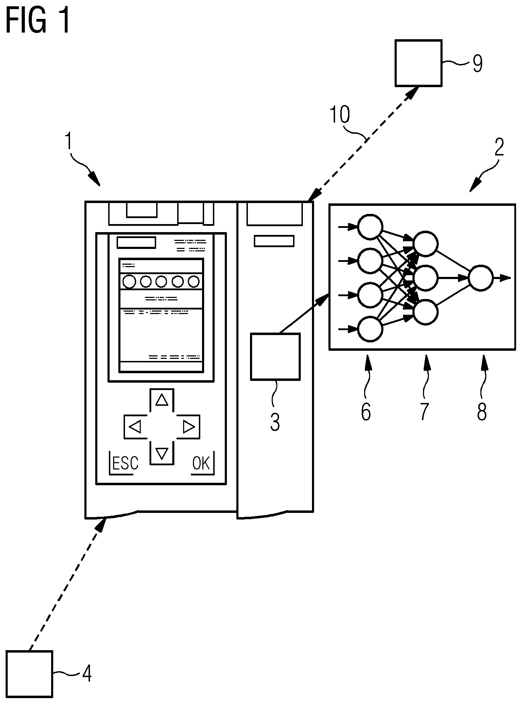

In der Figur 1 ist ein Ausführungsbeispiel eines Verfahrens zum Anpassen einer Speicherkapazität eines industriellen Steuerungs- und Überwachungssystems 1 bei der Durchführung eines Programmlaufes eines neuronalen Netzwerkes 2 dargestellt.

Das Steuerungs- und Überwachungssystem 1 umfasst einen neuromorphen Prozessor (NPU) 3. An den neuromorphen Prozessor (NPU) werden Live-Daten einer Sensoreinrichtung 4 übermittelt. Bei der Sensoreinrichtung 4 handelt es sich in diesem Ausführungsbeispiel um eine Kamera, durch die Kamerabilder aufgenommen und an den neuromorphen Prozessor (NPU) 3 gesendet werden. Die Live-Daten durchlaufen ein neuronales Netzwerk 2, das auf dem neuromorphen Prozessor (NPU) 3 eingesetzt wird. Dabei umfasst das neuronale Netzwerk 2 mindestens eine Eingabeschicht 6, mehrere verborgene Schichten 7 und mindestens eine Ausgabeschicht 8.

Das Steuerungs- und/oder Überwachungssystem 1 ist mit einem weiteren neuromorphen Prozessor (NPU) 9 verbunden. Es ist vorgesehen, dass mindestens eine verborgene Schicht 7 durch den weiteren neuromorphen Prozessor (NPU) bearbeitet wird. Die Verbindung zwischen dem Steuerungs- und Überwachungssystem 1 wird mittels eines Backplane Communication Bus 10 realisiert wird. Bei Backplane Communication Bus 10 handelt es sich um einen Hochgeschwindigkeitsbus, der eine hohe Datenübertragungsrate besitzt. Auf diese Weise können Informationen ohne nennenswerte Latenz von dem neuromorphen Prozessor (NPU) 3 zum weiteren neuromorphen Prozessor (NPU) 9 übertragen werden. Die Bearbeitung der verborgenen Schicht mittels Scale-Out an den weiteren neuromorphen Prozessor (NPU) 9 übermittelt.

Bei dem Verfahren wird durch das Steuerungs- und Überwachungssystem 1 ein Vergleich zwischen der verfügbaren Speicherkapazität des Steuerungs- und Überwachungssystems 1 und dem von dem Programmlauf benötigten Speicher durchgeführt. Der weiterer neuromorphe Prozessor (NPU) wird genutzt, wenn die verfügbare Speicherkapazität des neuromorphen Prozessors (NPU) 3 für den Programmlauf nicht ausreicht. Auf diese Weise kann systematisch ein weiterer neuromorpher Prozessor (NPU) genutzt werden, wenn Bedarf dazu besteht.

Ziel ist es, die Anzahl der belegten weiteren neuromorphen Prozessoren (NPU) und die Gesamtlatenzzeit zu reduzieren. Eine Variable, die durch den Optimierungsalgorithmus verändert werden soll, ist die NPU-ID, das heißt das mögliche Einsatzziel jeder Schicht des neuronalen Netzwerkes 2. Sobald eine nachfolgende Schicht (z. B. die nachfolgende Schicht von 1 ist 2, von 2 ist 3 und so weiter) nicht auf demselben weiteren neuromorphen Prozessor (NPU) 9 eingesetzt wird, ändert sich die Latenz von 0 auf 1, da ein Kommunikations-Overhead eingeführt wird.

Mittels eines vordefinierten Solvers wird das Minimum der benötigten weiteren neuromorphen Prozessoren (NPU) 9 ermittelt. Ebenso erfolgt eine NPU-Zuweisung mit einem Solver.

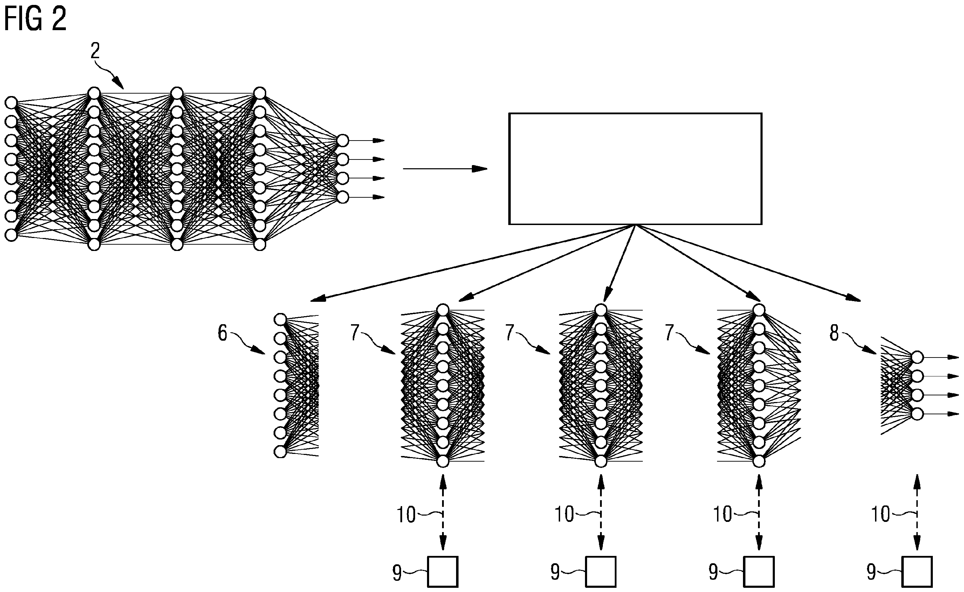

In Figur 2 ist schematisch ein neuronales Netzwerk 2 dargestellt, wobei das Modell des neuronalen Netzwerks 2 in seine verschiedenen Schichten aufgeteilt ist. Durch die Segmentierung der Schichten können die Zuteilungen der weiteren neuromorphen Prozessoren (NPU) 9 einfacher erfolgen.

Vereinfacht ist der Aufbau eines neuronalen Netzwerkes 2 folgendermaßen: Das Modell des neuronalen Netzwerkes 2 besteht aus Knoten, auch Neuronen genannt, die Informationen von anderen Neuronen oder von außen aufnehmen, modifizieren und als Ergebnis ausgeben. Dies erfolgt über drei verschiedene Schichten, denen jeweils eine Art Neuronen zugeordnet werden kann: solche für die Eingabeschicht 6, für die Ausgabeschicht 8 und die verborgene Schicht 7.

Die Information wird durch die Neuronen der Eingabeschicht 6 aufgenommen und durch die Neuronen der Ausgabeschicht 8 ausgegeben. Die Neuronen der verborgenen Schicht 7 liegen dazwischen und bilden innere Informationsmuster ab. Die Neuronen sind miteinander über sogenannte Kanten verbunden. Je stärker die Verbindung ist, desto größer die Einflussnahme auf das andere Neuron.

Die Eingabeschicht 6 versorgt das neuronale Netzwerk 2 mit den notwendigen Informationen. Die Neuronen der Eingabeschicht 6 verarbeiten die eingegebenen Daten und führen diese gewichtet an die nächste Schicht weiter. Die verborgene Schicht 7 befindet sich zwischen der Eingabeschicht 6 und der Ausgabeschicht 8. Während die Eingabeschicht 6 und Ausgabeschicht 8 lediglich aus einer Ebene bestehen, können beliebig viele Ebenen an Neuronen in der verborgenen Schicht 7 vorhanden sein. Hier werden die empfangenen Informationen erneut gewichtet und von Neuron zu Neuron bis zur Ausgabeschicht 8 weitergereicht. Die Gewichtung findet in jeder Ebene der verborgenen Schicht 7 statt. Die genaue Prozessierung der Informationen ist jedoch nicht sichtbar. Die Ausgabeschicht 8 ist die letzte Schicht und schließt unmittelbar an die letzte Ebene der verborgenen Schicht 7 an. Die Neuronen der Ausgabeschicht 8 beinhalten die resultierende Entscheidung, die als Informationsfluss hervorgeht.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: Steuerungs- und Überwachungssystem
- 2: Neuronales Netzwerk
- 3: Neuromorpher Prozessor (NPU)
- 4: Sensoreinrichtung
- 6: Eingabeschicht
- 7: Verborgene Schicht
- 8: Ausgabeschicht
- 9: Weiterer neuromorpher Prozessor (NPU)
- 10: Backplane Communication Bus

## Patentansprüche

1. Verfahren zum Anpassen einer Rechenleistung und/oder zur Anpassung einer Speicherkapazität eines industriellen Steuerungs- und/oder Überwachungssystems (1) bei der Durchführung eines Programmlaufes eines neuronalen Netzwerkes (2),
wobei das Steuerungs- und/oder Überwachungssystem (1) mindestens einen neuromorphen Prozessor (NPU) (3) umfasst, wobei Live-Daten, insbesondere Kamerabilder, an den neuromorphen Prozessor (NPU) (3) weitergeleitet werden, wobei die Live-Daten ein neuronales Netzwerk (2) durchlaufen, das auf dem neuromporphen Prozessor (NPU) (3) eingesetzt wird,
wobei das neuronale Netzwerk (2) mindestens eine Eingabeschicht (6), eine oder mehrere verborgene Schichten (7) und mindestens eine Ausgabeschicht (8) umfasst,
wobei das Steuerungs- und/oder Überwachungssystem (1) mit mindestens einem weiteren neuromorphen Prozessor (NPU) (9) verbunden ist, und wobei mindestens eine verborgene Schicht (7) durch den weiteren neuromorphen Prozessor (NPU) (9) bearbeitet wird.

2. Verfahren nach Anspruch 1, **dadurch gekennzeichnet, dass** die Verbindung zwischen dem Steuerungs- und/oder Überwachungssystem (1) mittels eines Backplane Communication Bus (10) realisiert wird.

3. Verfahren nach Anspruch 1 oder 2, **dadurch gekennzeichnet, dass** die Bearbeitung der verborgenen Schicht (7) mittels Scale-Out an den mindestens einen weiteren neuromorphen Prozessor (NPU) (9) übermittelt wird.

4. Verfahren nach einem der Ansprüche 1 bis 3, **dadurch gekennzeichnet, dass** n weitere neuromorphe Prozessoren (NPU) (9) genutzt werden, wobei n einer natürlichen Zahl entspricht.

5. Verfahren nach Anspruch 3, **dadurch gekennzeichnet, dass** ein Vergleich zwischen der verfügbaren Speicherkapazität des Steuerungs- und/oder Überwachungssystems (1) und dem von dem Programmlauf benötigte Speicher stattfindet und dass ein weiterer neuromorpher Prozessor (NPU) (9) genutzt wird, wenn die verfügbare Speicherkapazität eines weiteren neuromorphen Prozessors (NPU) (9) für den Programmlauf nicht ausreicht.

6. Verfahren nach Anspruch 4 oder 5, **dadurch gekennzeichnet, dass** durch einen Vergleich der verfügbaren Speicherkapazität des neuromorphen Prozessors (NPU) (3) und der einzelnen weiteren neuromorphen Prozessoren (NPU) (9) und dem benötigten Speicher des Programmlaufs die Anzahl der benötigten weiteren neuromorphen Prozessoren (NPU) (9) minimiert wird.

7. Verfahren nach Anspruch 6, **dadurch gekennzeichnet, dass** mittels eines vordefinierten Solvers das Minimum der benötigten weiteren neuromorphen Prozessoren (NPU) ermittelt wird.

8. Verfahren nach Anspruch 7, **dadurch gekennzeichnet, dass** der Solver mittels eines Generalized Reduced Gradients (GRG) arbeitet.

9. Vorrichtung zum Anpassen einer Rechenleistung und/oder zur Anpassung einer Speicherkapazität eines industriellen Steuerungs- und/oder Überwachungssystems (1) bei der Durchführung eines Programmlaufes eines neuronalen Netzwerkes (2),
wobei das Steuerungs- und/oder Überwachungssystem (1) mindestens einen neuromorphen Prozessor (NPU) (3) umfasst, wobei eine Sensoreinrichtung (4) derart eingerichtet ist, dass sie Live-Daten, insbesondere Kamerabilder, an den neuromorphen Prozessor (NPU) (3) weiterleitet,
wobei die Live-Daten ein neuronales Netzwerk (2) durchlaufen, das auf dem neuromorphen Prozessor (NPU) (3) eingesetzt wird,
wobei das neuronale Netzwerk (2) mindestens eine Eingabeschicht (6), eine oder mehrere verborgene Schichten (7) und mindestens eine Ausgabeschicht (8) umfasst,
wobei das Steuerungs- und/oder Überwachungssystem (1) mit mindestens einem weiteren neuromorphen Prozessor (NPU) (3) verbunden ist, und dass der weitere neuromorphe Prozessor (NPU) (9) derart eingerichtet ist, dass mindestens eine verborgene Schicht (7) durch den weiteren neuromorphen Prozessor (NPU) (9) bearbeitbar ist.

10. Vorrichtung nach Anspruch 9, **dadurch gekennzeichnet, dass** die Vorrichtung derart eingerichtet und ausgestaltet ist, ein Verfahren nach einem der Ansprüche 1 bis 8 durchzuführen.

11. System zum Anpassen einer Rechenleistung und/oder zur Anpassung einer Speicherkapazität eines industriellen Steuerungs- und/oder Überwachungssystems (1) bei der Durchführung eines Programmlaufes eines neuronalen Netzwerkes (2), wobei das System ein Klienten-Server-System ist, umfassend einen Server und zumindest zwei Klienten, und die zumindest zwei Klienten jeweils eine Vorrichtung nach einem der Ansprüche 9 oder 10 aufweisen, und das System dazu eingerichtet ist, das Verfahren nach einem der Ansprüche 1 bis 8 unter Anwendung des Prinzips föderierten Lernens auszuführen.
